# EUROPEAN PATENT APPLICATION

(11) **EP 1 808 266 A2**
(43) Date of publication of application: **18.07.2007**
(21) Application number: 07250140.6
(22) Date of filing: 15.01.2007
(51) Int. Cl.: B23P 6/00, F01D 5/00, B23K 26/34

(54) **Turbine platform repair using laser clad**

(30) Priority: 16.01.2006 SG 200600246
(71) Applicant: UNITED TECHNOLOGIES CORPORATION, Hartford, CT 06101 (US)
(72) Inventor: Cheng, Kenny, Jurong West Central, 641681 (SG); Jek, Kin Keong Thomas, Chestervale, 679973 (SG)
(74) Representative: Leckey, David Herbert

(57) **Abstract**

A method of restoring a gas turbine engine component (32) includes removing a defect section (44) of a turbine engine component (32) according to a template (54). The template (54) has a standardized shape and is used in a standardized location on the turbine engine component (32). The template (54) is produced based upon common defect sections from other turbine engine components. A laser cladding (76) is used to build a replacement section in place of the defect section (44). Thus, the turbine engine component (32) is restored to near its original shape.

## Description

### BACKGROUND OF THE INVENTION

This invention relates to repair of gas turbine engine components and, more particularly, to a method for repairing a standardized section of a turbine engine component.

Conventional gas turbine engines typically include turbine sections having an alternating arrangement of rotating turbine blades and static turbine vanes. A flow of hot gases from a combustor section expands against the turbine blades and vanes to rotationally drive the turbine blades, which are coupled to an engine main shaft that drives a compressor section.

During engine operation, the hot gases produce a corrosive environment that corrosively attacks the surfaces of the blades and vanes and often results in corrosive pitting. The hot gases, soot from combustion, and particles within the flow of hot gases, also wear against the turbine blades and vanes and erode the surfaces of the blades, vanes, and other turbine engine components, which may undesirably reduce the useful life of the turbine blade or vane.

Conventional engine component repair techniques have been used to repair component microcracks, from fatigue for example, but are undesirable for several reasons. One conventional repair method includes brazing the engine component to repair the microcracks. Typically, brazing includes heating the engine component or relatively large zone of the engine component at high temperatures to melt a braze filler to fill the microcracks. The high temperatures may result in undesirable residual thermal stress in the engine component and undesirable changes in the metallic microstructure of the repaired areas.

Accordingly, there is a need for a method of repair that prolongs the useful life of a turbine engine component without inducing high levels of residual stress.

### SUMMARY OF THE INVENTION

A preferred method of restoring a gas turbine engine component according to the present invention includes removing a defect section of a turbine engine component according to a template. The template has a standardized shape and is used in a standardized location on the turbine engine component. The template is based upon common defect sections from prior turbine engine components. A laser cladding is used to build a replacement section in place of the removed detect section. Thus, the turbine engine component is restored to near its original shape.

A gas turbine engine assembly according to the present invention includes a turbine engine component having a laser cladding replacement section. The replacement section has a standard feature that is established by common defect locations of other turbine engine components. The other turbine engine components exhibit a pattern of defects that occur during use of the turbine engine components.

Accordingly, the disclosed example method and assembly provide for a prolonged life of a turbine engine component without inducing high levels of residual stress.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows.
Figure 1 shows an example combustion engine.
Figure 2 shows a plurality of test turbine blades from which a defect pattern is identified.
Figure 3 shows a repair template for outlining a standardized defect shape and location on a turbine blade.
Figure 4 illustrates marking an outline on a turbine blade using the template of Figure 3.
Figure 5 shows the defect section of the turbine blade of Figure 4 removed and laser cladding a replacement section.
Figure 6 shows the turbine blade of Figure 5 having a replacement section in place of the removed defect section.

### DETAILED DESCRIPTION OF THE PREFERRED EMBODIMENT

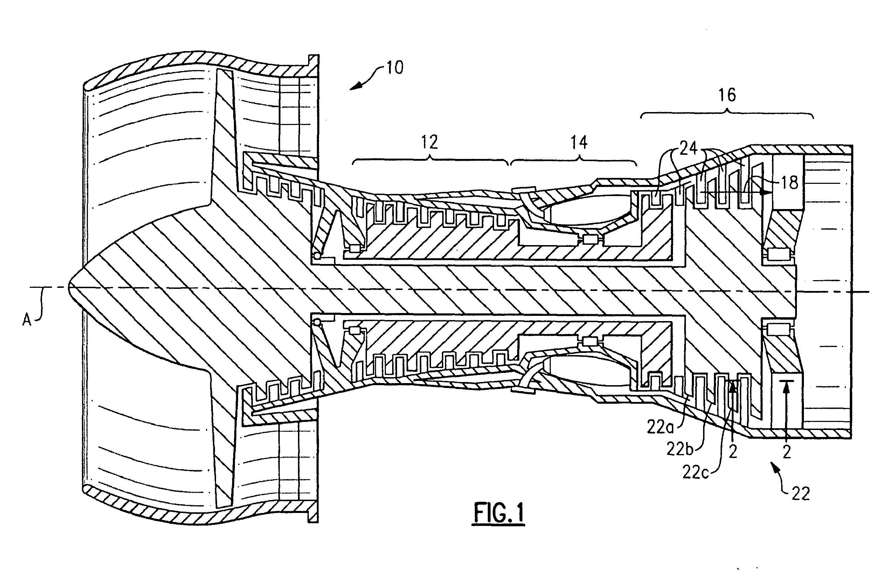

Figure 1 illustrates selected portions of an example combustion engine 10, such as a gas turbine engine for an aircraft. In this example, the combustion engine 10 includes a compressor section 12, a combustor section 14, and a turbine section 16. The combustion engine 10 operates in a known manner, feeding compressed air or oxidizer from the compressor section 12 to the combustor section 14. The compressed air or oxidizer is mixed with fuel and reacts to produce a flow of hot gases 18. The turbine section 16 transforms the flow of hot gases 18 into mechanical energy to drive the compressor section 12. An exhaust nozzle 20 directs the hot gases 18 out of the combustion engine 10 to provide thrust to the aircraft or other vehicle.

In the illustrated example, the turbine section 16 includes alternating rows of rotary airfoils or blades 22a, 22b, 22c and static airfoils or vanes 24. The vanes 24 are arranged in various stages, such a first stage, a second stage, a third stage, a fourth stage, etc. The blades 22a, 22b, 22c and vanes 24 are formed from a superalloy metal material, such as a cobalt or nickel superalloy in a casting, forging, or other known manufacturing process.

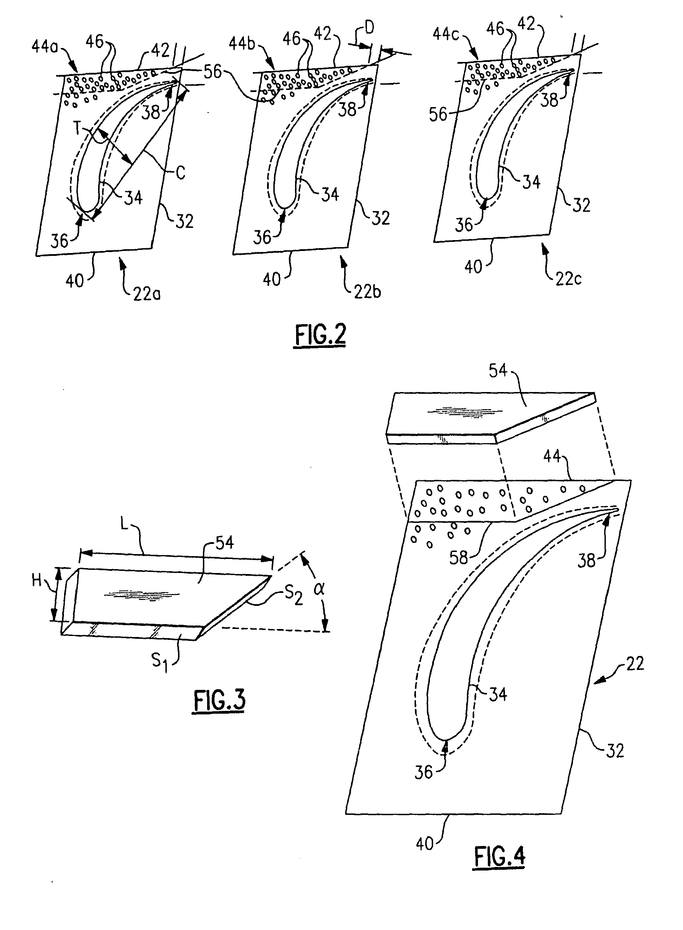

Figure 2 shows a radially outward view of the individual blades 22a, 22b, 22c according to the sectioning shown in Figure 1. Each of the blades 22a, 22b, 22c includes a platform 32 and an airfoil 34 having a leading edge 36 and a trailing edge 38. The leading edge 36 is generally located toward the combustor section 14 and the trailing edge 38 is generally located toward the exhaust nozzle 20 in the combustion engine 10 (Figure 1).

The leading edge 36 and the trailing edge 38 define a chordwidth C of the blade 22. In the illustrated example, an aspect ratio of the chordwidth C to a thickness T of the airfoil 34 at least partially determines an aerodynamic efficiency of each blade 22a, 22b, 22c. That is, a relatively larger aspect ratio corresponds to a greater aerodynamic efficiency, while a relatively smaller aspect ratio corresponds to a lesser acrodynamic efficiency.

Each platform 32 includes a leading edge 40 and a trailing edge 42 that correspond, respectively, to the airfoil 34 leading edge 36 and trailing edge 38. In the illustrated example, the platforms 32 each include a respective defect section 44a, 44b, 44c, such as a section containing microcracks or corrosive pitting, near the trailing edges 42 of the platforms 32. ln the illustration, the defect sections 44a, 44b, 44c each include cracks 46 that are the result of fatigue for example. Alternatively, or in addition to the cracks 46 there may be corrosive pitting, also known as hot corrosion, which is usually caused by sulphates such as Na₂SO₄ and other contaminants in the hot gas 18.

in this example, the defect sections 44a, 44b, 44c are commonly located near a corner (upper left corner in the illustration) of the trailing edges 42 of each of the blades 22a, 22b, 22c. The cracks 46 on each defect section 44a, 44b, 44c also cover a similarly shaped area on the respective platforms 32 of the blades 22a, 22b, 22c. Thus, in this example, the blades 22a, 22b, 22c exhibit a defect pattern, which may be the result of cyclic stress in that part of the platform 32 for example. Given this description, one of ordinary skill in the art will recognized that, although the blades 22a, 22b, 22c are shown as having originated from the same engine, blades from different engines may also exhibit a defect pattern.

Once a pattern of defects has been identified, the pattern is used to produce a repair template 54 (Figure 3), such as a metal cutout or other material that is formed to provide an outline. In one example, the repair template 54 is a computer file. In another example, the repair template 54 is useable with an automated repair process. The repair template 54 will be used to repair future blades that are likely to exhibit a similar defect pattern to the blades 22a, 22b, 22c (i.e., test blades). The dotted line 56 indicates a boundary of a standardized section that the repair template 54 covers on the blades 22a, 22b, 22c and has a specific shape to cover a significant amount of the cracks 46. The identified standard section is a distance D, about 0.150 inches (3.8 mm) in the example, from the corner C (upper right corners of the platforms 32 in Figure 2).

In the illustrated example, the repair template 54 has a polygonal shape having a length L and a height H. Side S₁ forms an angle alpha of 20° with side S₂. In one example, the length L is approximately 0.170 inches (4.3 mm).

Referring to Figure 4, in one example, the repair template 54 is used to mark a line 58 on a blade 22 that is to be repaired. The line 58 serves as a guide to cutout the defect section 44 from the platform 32 to repair the blade 22. The defect section 44 is cutout using a known cutting device. Optionally, removal is conducted in an automated fashion via computer control of the cutting device according to a computer file repair template 54.

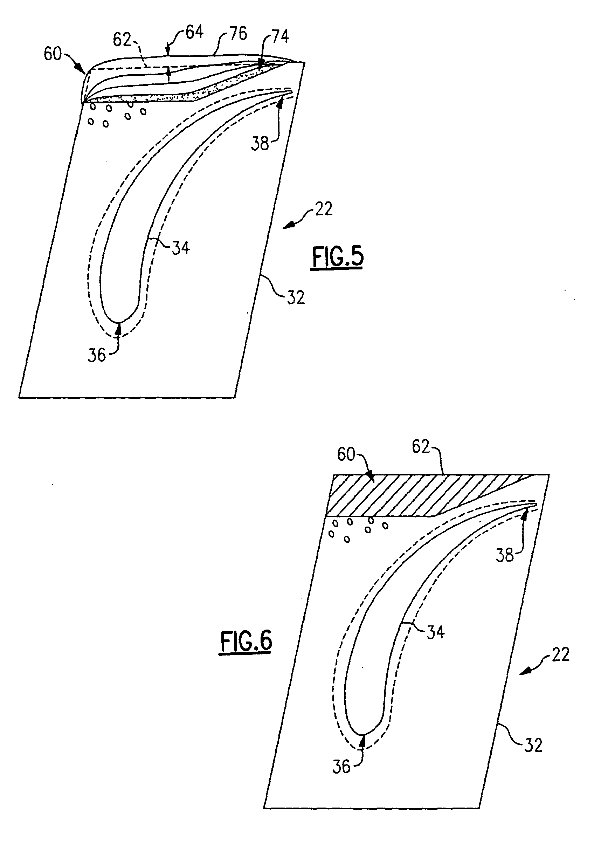

Referring to Figure 5, after removal of the defect section 44, a laser cladding is deposited to rebuild the platform 32. A filler material 74 is deposited in place of the defect section 44 in a known manner as a powder or other type of filler material to gradually build-up a replacement section 60. In one example, the filler material 74 is of a similar composition to the superalloy used to originally form the blade 22 to promote a strong bond between the cladding and the original superalloy of the blade 22. In another example, the filler material is a composition according to the standard set forth in AMS 5837.

A laser consolidates (i.e., melts and fuses) the deposited filler material 74 in a known manner. The melting and fusing of the tiller material 74 is relatively rapid and accurate, which provides the benefit of a fast blade 22 repair cycle time and a high degree of repeatability. Furthermore, laser cladding melts and fuses a relatively small volume of the platform 32 and filler material 74 to minimize the size of the heat affected zone of the platform 32, which is a drawback of prior art brazing and welding that results in relatively large heat affected zones and residual stress.

The consolidated filler material 74 builds-up to form an oversized cladded portion 76 that is bonded to the original superalloy material of the blade 22. The oversized cladded portion 76 is larger than an original surface location 62 by an amount 64. This provides the benefit of ensuring that replacement section 60 completely restores the shape and dimensions of the platform 32.

The oversized cladded portion 76 is then machined to the original surface dimension 62 (Figure 5). In one example, the machining includes known grinding, grit blasting, polishing, or other known machining method that provides a smooth transition from the replacement section 60 to the original, non-repaired portions of the platform 32.

The above example discloses a method for restoring the blade 22, or other gas turbine engine component. The platform 32 of the blade 22 exhibits a defect pattern similar to defect sections of prior test blades. The defect section 44 of the platform 32 is removed according to a template 54. The template 54 has a standardized shape and is used in a standardized location on the platform 32. The template 54 is based upon common defect sections from prior blades 22a, 22b, 22c. A laser cladding is used to build a replacement section 60 on the platform 32 in place of the defect section 44. Thus, the blade 22 is restored to near its original shape to extend the life of the blade 22.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A method of restoring a gas turbine engine component (22a), including the steps of:
(a) determining a standard repair section based upon a plurality of test turbine engine components;
(b) removing a section of a used turbine engine component that corresponds to the standard repair section; and
(c) depositing a laser cladding on the used turbine engine component to produce a replacement section in the location of the removed section of step (b).

2. The method as recited in Claim 1, wherein step (a) includes determining a standard location of the standard repair section relative to a known turbine engine component shape.

3. The method as recited in Claim 1 or 2 wherein step (a) includes determining a standard shape of the standard repair section.

4. The method as recited in Claim 1, 2 or 3 wherein step (a) includes determining a defect section location in common between at least a two of the plurality of test turbine engine components (22a).

5. The method as recited in any preceding claim, wherein step (a) includes determining a standard location of the standard repair section relative to an airfoil orientation of the plurality of test turbine engine components (22a).

6. The method as recited in any preceding claim, wherein step (b) includes removing a section (44) that is located on a turbine platform (32) of the used turbine engine component (22a) that corresponds to the standard repair section.

7. The method as recited in Claim 6, wherein step (b) includes removing a section (44) that is located on a trailing edge portion (42) of the turbine platform (32).

8. The method as recited in Claim 6, wherein step (b) includes removing a corner section that is located on a trailing edge portion (42) of the turbine platform (32).

9. A method of restoring a gas turbine engine component (22a), including the steps of:
(a) removing a section (44) of a turbine engine component, wherein the section corresponds to a predetermined template (54); and
(b) depositing a laser cladding on the turbine engine component (22a) to produce a replacement section in the location of the removed section of step (a).

10. The method as recited in Claim 9, wherein step (a) includes tracing an outline (58) of the predetermined template onto the turbine engine component (22a).

11. The method as recited in Claim 10, wherein step (a) includes cutting along the outline (58) to remove the section (44).

12. The method as recited in Claim 9, 10 or 11 wherein step (a) includes removing a section (44) of a turbine engine component that corresponds to a polygonal shape of the predetermined template (54).

13. The method as recited in any of Claims 9 to 12, wherein the predetermined template (54) of step (a) has a dimension that is about 0.170 inches (4.3 mm).

14. The method as recited in any of Claim 9 to 13, wherein step (a) includes removing a crack section of the turbine engine component (22a).

15. A gas turbine engine assembly comprising:
a turbine engine component having a laser cladding replacement section (76) with a standard feature at least partially established by a defect location on a different turbine engine component (22a).

16. The assembly as recited in Claim 15, wherein the standard feature is a location of the laser cladding replacement section (76) on the turbine engine component.

17. The assembly as recited in Claim 15 or 16, wherein the standard feature is a shape of the laser cladding replacement section (76).

18. The assembly as recited in Claim 15, 16 or 17 wherein the standard feature is based upon at least a common defect location or common defect shape between a plurality of turbine engine components, the different turbine engine components being part of the plurality of turbine engine components.

19. The assembly as recited in any of Claims 15 to 18, wherein the turbine engine component comprises a turbine blade platform (32).

20. A gas turbine engine including a compressor section, a combustor section, and a turbine section, the turbine section having a gas turbine engine assembly as recited in any of Claims 15 to 19.
